# EUROPEAN PATENT APPLICATION

(11) **EP 4 350 868 A1**
(43) Date of publication of application: **10.04.2024**
(21) Application number: 23201310.2
(22) Date of filing: 02.10.2023
(51) Int. Cl.: H01M 50/342, H01M 50/35

(54) **PASSIVE SAFETY SYSTEM FOR A BATTERY MODULE**

(30) Priority: 04.10.2022 NL 2033231
(71) Applicant: Storm Group B.V., 5708 JZ Helmond (NL)
(72) Inventor: FRINTS, Jules Joseph Maria, Helmond (NL); VAN DIGGELEN, Bram Thomas, Helmond (NL)
(74) Representative: Dennemeyer & Associates S.A.

(57) **Abstract**

The disclosure relates to a battery system for powering an electric vehicle. The system comprises an array of battery cells, a venting chamber, and a cover layer arranged between the battery cell array and the venting chamber covering the array of battery cells. The cover layer is arranged to locally burst at a location of a failed battery cell of the array under influence of effluents being vented from the failed battery cell so as to enable the effluents to escape through the locally burst cover layer into the venting chamber.

## Description

### FIELD

The invention relates to battery systems for storing power, particularly to safety systems for such battery systems. The invention more particularly relates to modular battery packs for powering electric drives, specifically for off-highway vehicles, such as construction vehicles.

### BACKGROUND

Battery systems typically include a plurality of battery cells which collectively provide a source of electric energy. Manufacturing errors, thermal failure, mechanical failure, internal or external short circuiting of the battery cells, can cause a battery cell to fail, thereby decomposing exothermally which results in the battery cell to uncontrollably discharge and release effluents. Such sudden release of all remaining thermal and electrochemical energy from a battery cell is commonly referred to as thermal runaway.

### SUMMARY

It is an aim to provide a safety system, particularly a passive safety system, for a battery system. It is more particularly an aim to mitigate the effect of thermal runaway of a battery cell in a battery system. In a more general sense it is an object to overcome or ameliorate at least one of the disadvantages of the prior art, or at least provide alternative processes and structures that are more effective than the prior art. At any rate it is at the very least aimed to offering a useful choice and contribution to the existing art.

According to an aspect, a battery system is provided for powering an electric drive. The system comprises of battery cells, a venting chamber, and a cover layer arranged between the battery cells and the venting chamber covering battery cells. The cover layer is arranged to locally burst at a location of a failed battery cell under influence of effluents being released from the failed battery cell so as to enable the effluents to escape through the locally burst cover layer into the venting chamber. The venting chamber provides space for the effluents to expand and diffuse, and allows the effluents to be guided away from the remaining unaffected battery cells. Hence, the failed battery cell is enabled to vent into the venting chamber, such that the initiation of further thermal runaway events of other yet unaffected battery cells is prevented. The battery cell effluents may include gasses, liquids and/or solid particles that are released from the battery cell. The cover layer locally burst at the location of the failed battery, hence leaving the remainder of the cover layer substantially intact. The cover layer may therefor provide a barrier between the effluents being vented into the venting chamber and the other, unaffected battery cells. The cover layer may accordingly prevent direct contact between the effluents and the other battery cells.

Optionally, the battery cells are arranged in a battery cell array.

Optionally, the cover layer is configured for shielding battery cells from effluents escaped into the venting chamber. The cover layer may for example be made of a flame retardant material.

Optionally, the cover layer comprises weakened zones arranged to burst under influence of the effluents being released from the failed battery cell. The weakened zones may be formed in various ways, for example by areas of reduced thicknesses of the cover layer.

Optionally, each battery cell is associated with a respective one of the weakened zones of the cover layer. The cover layer can hence controllably burst at the weakened zone at the location of the failed battery cell. The number of weakened zones may be equal to the number of battery cells. Alternatively, the number of weakened zones may be lower than the number of battery cells. For example, multiple battery cells may be associated with a common weakened area. Also, the number of weakened zones may be higher than the number of battery cells.

Optionally, the cover layer includes a flame-retardant material. Optionally, the cover layer includes an electrically insulating material. Optionally, the cover layer includes a thermally insulating material. The cover layer may for example be made of a silicone-based material such as a silicone resin.

Optionally, the cover layer has a thickness of between 0.1 and 15 mm, particularly between 0.2 and 10 mm, more particular between 0.5 and 6 mm. It will be appreciated that the thickness of the cover layer is defined as a distance through the cover layer between a side of the cover layer facing the battery cells and a side of the cover layer facing the venting chamber. The cover layer optionally has a substantially uniform thickness. The thickness of the cover layer provides control over the bursting properties of the cover layer. If the cover layer is too thin, the bursting area might become too large, such that neighboring battery cells are exposed to the vented effluents of the failed battery cell. This increases the risk that the thermal runaway of a failed battery cell spreads to neighboring battery cells. Also, if the cover layer is too thin, shielding properties of the cover layer for the unaffected battery cells may be insufficient. On the other hand, if the cover layer is to thick, it may not burst adequately, such that the effluents are inhibited from being released into the venting chamber. The effluents might instead be released in an interstitial space between the battery cells, where it can trigger thermal runaway in neighboring battery cells, and/or cause a pressure build-up at the failing battery cell with the risk of inducing an explosion.

Optionally, the venting chamber includes one or more venting channels configured for directing the effluents through the venting chamber towards an outlet of the venting chamber. The one or more venting channels may guide the vented effluents away from the battery cells, so as to minimize an exposure of the cover layer and the unaffected battery cells being covered thereby to the vented effluents. The venting channels may be formed by venting channel walls that e.g. extend between the cover layer and a housing. The venting channel walls may be arranged to not burst under influence of the vented effluents, and stay intact.

Optionally, the battery cells each include a cylindrically shaped body which extends along a longitudinal axis between two end faces, wherein the battery cells are arranged with their longitudinal axes in parallel, and wherein the cover layer covers an end face of the battery cell bodies. Cylindrical battery cells may be configured to vent through an end faces in case of a thermal runaway event. An end face of cylindrical battery cells may be, e.g. deliberately, the weakest portion of the battery cell casing.

Optionally, the battery cells include a venting end face and a non-venting end face, wherein the system may be so arranged that the cover layer covers the venting end face of the battery cells. The venting end face of the end faces of cylindrical battery cells may for example include a weakened zone or valve, whereas the non-venting end face does not. The non-venting end face may for example be reinforced compared to the venting end face, to cause the battery cell to vent through the venting end face in case of a thermal runaway.

Optionally, the battery cells each include a positive pole terminal and a negative pole terminal being at the same end face of the battery cell. The positive and negative pole terminals may for example be arranged at the venting end face of the battery cells. Alternatively, the positive and negative pole terminals may for example be arranged at the non-venting end face of the battery cells.

Optionally, the battery cells are so arranged that their positive and negative pole terminals are at the same side.

Optionally, the cover layer covers the end face of the battery cells at which the positive and negative pole terminals are provided. The cover layer may hence insulate the pole terminals, reducing a risk of short circuiting.

Optionally, the system comprises a cooling body in thermal contact with the battery cells, wherein, optionally, the cooling body is arranged at a side opposite the side at which the positive and negative pole terminals of the battery cells are provided. The cooling body can particularly be arranged to extract heat from the failed battery cell to temper the thermal runaway of the failed cell. The system may be so arranged to inhibit the transfer of extracted heat from the failed battery cell via the cooling body to neighboring unaffected battery cells. A thermal agent, e.g. a thermally conductive paste, may for example be provided between each battery cell and the cooling body, configured for providing a thermal resistance between each battery cell and the cooling plate. The thermal resistance may be such that heat is adequately transferred from any, e.g. failed, battery cell via the thermal agent to the cooling body, but that heat from the, e.g. failed, battery cell is sufficiently impeded from being transferred via the thermal agent, the cooling body, and again the thermal agent to another battery cell.

Optionally, the battery cells are electrically connected to one another by a plurality of connector arms which extend between pole terminals of respective battery cells, and wherein each of the connector arms includes a fuse section configured to break, thereby forming a gap, in case an overload current flows through the connector arm, wherein the fuse section is encapsulated by the cover layer. Optionally, the cover layer is configured to encapsulate each connector arm entirely.

The plurality of separate connector arms may be physically separate from one another. For example, each battery cell may include a pole terminal that is directly electrically connected to a pole terminal of at least one other battery cell by a respective one of the plurality of separate connector arms. Each separate connector arm may for instance electrically connect at most two battery cells with each other. Hence, the array of battery cells can be electrically interconnected without having to use a current collector plate. This could provide more room for the battery cells of the array to vent in case of a battery cell failure. Current collector plates typically cover a substantial portion the cell array, and therefore obstruct venting of the failed battery cell, thereby increasing the risk of igniting neighboring battery cells. By directly connecting battery cells to each other using the individual connector arms, the coverage of the battery cells by the electrical connectors can be minimized.

Optionally, the cover layer is configured to quench an arc formed in the gap. Optionally, the cover layer is configured to protect the connector arms against corrosion and/or mechanical stress, such as vibrations.

Optionally, each connector arm of the plurality of connector arms is formed by a single bonding wire. The bonding wire may be configured to melt in case an overcurrent flows therethrough, causing the bonding wire to break the electric connection between cells.

Optionally, the bonding wires are noncrossing, to minimize the risk of short circuiting.

Optionally, the venting chamber is substantially sealed from an exterior of the battery module. This prevents contaminants from entering the venting chamber, and deteriorating the components of the battery system.

Optionally, the system comprises a pressure relief valve arranged between the venting chamber and an exterior of the battery module for allowing an overpressure in the venting chamber to be controllably diverted out of the venting chamber.

Optionally, the system comprises a housing holding the array of battery cells, wherein the venting chamber is formed between the cover layer and the housing.

Optionally, the housing is spaced from the cover layer to define the venting chamber by a spacing of at least 1 mm, preferably at least 2 mm, such as between 2 and 20 mm, more particular between 2 and 10 mm.

Optionally, the battery cells define a interspacing between one another, said interspacing being filled with a gas. The interspacing may for example be filled with air, or an inert gas such as nitrogen gas. The interspace may be free of the cover layer material. Optionally, the cover layer material may be provided in the interspacing to thermally and electrically isolate the battery cells from each other. The cover layer material may for instance encapsulate each of the battery cells.

According to an aspect, a battery module is provided comprising a system as described herein. The battery module may for example include a module housing holding the battery cells, wherein the venting chamber is formed between the cover layer covering the battery cells and the housing of the battery module. Multiple battery modules may be interconnected to form a modular battery pack.

According to an aspect, a modular battery pack is provided, comprising a plurality of interconnected battery modules as described herein. The battery pack may include battery pack housing, holding the plurality of interconnected battery modules. The battery pack may include a pack terminal for connecting the battery pack to an electric motor of a vehicle, and/or to a charger for charging the battery cells held by the battery modules. The battery pack housing may include an outlet opening, e.g. closed by a valve such as a pressure relief valve, for allowing effluents vented from one or more of the battery modules, to exit from the pack to an exterior of the pack. The battery modules may be arranged in the battery pack so as to form venting channels between the modules, which enable effluents to exit through the outlet opening of the pack.

Optionally, the battery pack includes a sensor for sensing a thermal runaway event in one of the battery modules, and a controller, communicatively connected to the sensor, configured for disconnecting the battery pack from a load or charger in case a thermal runaway event is detected and/or transmit an alarm signal e.g. to notify an operator.

According to an aspect, a vehicle is provided, particularly a construction vehicle, comprising a battery system as described herein, or a battery module or battery pack as described herein.

It will be appreciated that any of the aspects, features and options described herein can be combined. It will particularly be appreciated that any of the aspects, features and options described in view of the battery system apply equally to the battery module and the battery pack, and vice versa.

### BRIEF DESCRIPTION OF THE DRAWINGS

Embodiments of the present invention will now be described in detail with reference to the accompanying drawings in which:
Figures 1A and 1B shows a schematic side view of a battery system;
Figures 2A and 2B shows a schematic perspective view of a battery system; and
Figure 3 shows a schematic plan view of a battery module;
Figure 4 shows schematic of a battery pack.

### DETAILED DESCRIPTION

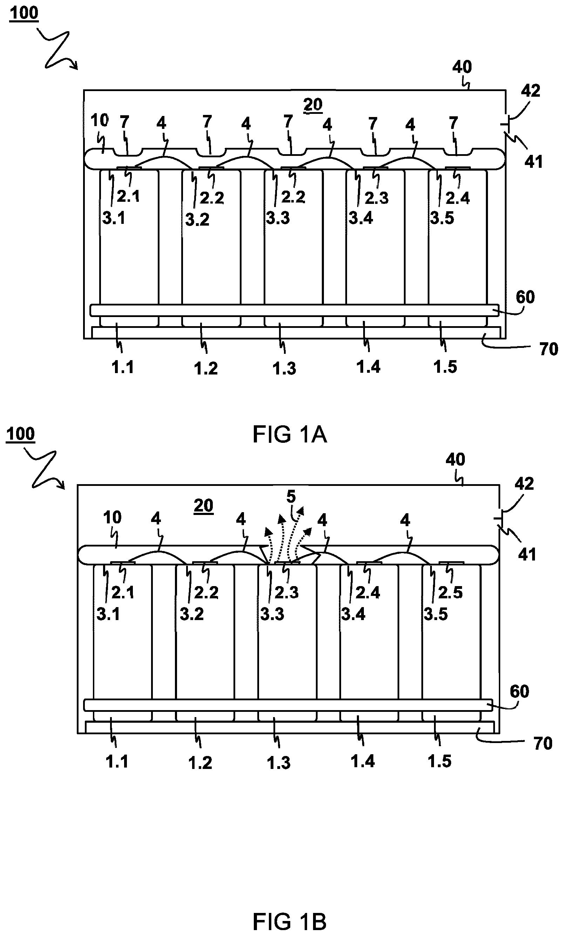

Figures 1A and 1B show a schematic example of a battery system 100. The battery system 100 comprises a plurality of battery cells 1.i, here arranged in an array. An array holder 60 holds the battery cells 1.i in a fixed spatial configuration relative to each other. The battery cells 1.i of the array each have, in this example, a cylindrically shaped battery body with a constant circular cross section. While the exemplary system 10 is described herein as having cylindrical battery cells, it will be appreciated that battery cells of other types can be used, such as pouch or prismatic battery cells. The cylindrically shaped battery body of each battery cell 1.i in this example extends between a top face and a bottom face. The cylindrical battery cells 1.i are here arranged with their longitudinal axis in parallel. The cylindrical battery cells 1.i may be selected from various standard dimensioned cells available on the market, such as a 21700, 18650 battery cell, or other.

Here, each battery cell 1.i comprises at its top face a positive pole terminal 2.i and a negative pole terminal 3.i. In this example, the positive and negative pole terminals 2.i, 3.i of the battery cells 1.i are arranged at the same side of the array, here a top side. The positive pole terminal 2.i is in this example at a central portion of the top face, while the negative pole terminal 3.i is at a circumferential portion of the top face. The bottom face of each battery cell 1.i, opposite the top face, is free from pole terminal connections, and in this example abuts a cooling body 70, particularly a cooling plate. The battery cells 1.i are here supported by the cooling body 70, and in thermal contact therewith.

The system 100 further comprises a cover layer 10, covering the battery cells 1.i. The cover layer 10 is here deposited on the top faces of the battery cells 1.i. The cover layer here directly contacts each of the cells 1.i, here the top faces. The system 100 also comprises a venting chamber 20, here above the cover layer 10. The cover layer 10 here separates the battery cells 1.i from the venting chamber 20. The venting chamber 20 is in this example formed between the cover layer 10 and a housing 40. The venting chamber 20 hence provides a head space above the cover layer 10.

The cover layer 10 is configured to locally burst under influence of effluents 5 being vented from a failed battery cell 1.i of the array so as to enable the effluents 5 to escape through the locally burst cover layer into the venting chamber 20. Figure 1A shows the cover layer 10 intact, whereas figure 1B shows the cover layer 10 burst at a location of a failed battery cell 1.3. Thermal runaway of the failed battery cell 1.3 causes effluents 5 to be released through the top face of the battery cell 1.3. Under influence of the released effluents 5, the cover layer 10 locally bursts to provide a passage through the cover layer 10 to allow the effluents 5 to be vented from the battery cell into the venting chamber 20. The cover layer 10 only bursts at the location of the failed battery cell 1.3, and stays substantially intact elsewhere. Hence, the cover layer 10 provides a barrier between the effluents 5 being vented into the venting chamber 20 and the other intact battery cells 1.1, 1.2, 1.4, 1.5. the cover layer 10 is particularly arranged to shield the other intact battery cells 1.1, 1.2, 1.4, 1.5 from the effluents 5 being released into the venting chamber 20 by the failed battery cell 1.3. The effluents 5 may be evacuated from the venting chamber 20 through an opening 41 in the housing 40, here provided with a pressure relief valve 42.

Here, the cover layer 10 is provided with weakened zones 7, to facilitate the local bursting of the cover layer 10 at the location of a failed battery cell. The weakened zones 7 are here formed by a local depression, providing an effective local decrease in the cover layer thickness, at the location of the battery cell.

The cover layer 10 can be made of various materials. The cover layer 10 is preferably made of a flame retardant material, e.g. including a Polyurethane or silicone based material such as a silicone resin. The cover layer 10 is preferably thermally and/or electrically insulating. The cover layer 10 may be deposited on the array of battery cells 1.i in substantially liquid form, e.g. a paste, wherein the cover layer 10 is cured after deposition on the array to form a solid cover layer 10 in use of the battery system. Alternatively, the cover layer 10 is not cured and may remain substantially liquid, e.g. a paste, in use of the battery system.

In this example, the cover layer 10 has a substantially uniform thickness, here of about 1.5 mm, but the cover layer 10 may alternatively have non-uniform thickness. It will be appreciated the cover layer thickness can be adjusted in accordance with the material of the cover layer, to obtain desired bursting properties. The cover layer 10 may be thinner at predefined locations of the layer 10, which predefined locations correspond to the locations of the battery cells 1.i. Hence, weakened zones may be created in the cover layer 10 to improve the local bursting properties of the cover layer 10.

In this example, the battery cells 1.i of the array are electrically interconnected by a plurality of separate connector arms 4. The connector arms 4 are, here, physically separate from one another. Each connector arm 4 connects at most two battery cells with each other. Each connector arm particularly connects at most two pole terminals with each other. Each connector arm 4 defines an electrically conductive path, particularly a nonbranching path, that extends between a first end and a second end. The first and second end attach to pole terminals of two respective battery cells 1.i, hence electrically connecting at most two battery cells with each other. Each connector arm particularly connects two adjacent battery cells 1.i with one another, hence minimising the extent of the connector arms. The connector arms 4 may particularly be noncrossing, to minimise the risk of the connector arms contacting each other and creating unintended short-circuits. In this example, each of the connector arms 4 is formed by single bonding wire. This provides an easily adaptable way of interconnecting the battery cell array 10. The system does not include a current collector plate that interconnects multiple battery cells simultaneously.

The cover layer 10 here particularly covers the positive and negative pole terminals 2.i, 3.i of the battery cells 1.i. The cover layer 10 also, here, particularly encapsulates the connector arms 4, which are here formed by bonding wires, that electrically connect the individual battery cells 1.i with one another. The bonding wires may melt in case an overcurrent flows through them, causing a gap to form that breaks the electric connection. The cover layer 10 may particularly be arranged to quench a spark that may form over the gap. The cover layer 10 may for example be collapsible, intumescent and/or char-forming, e.g. under influence of heat, to quench potential short circuit over the gap, e.g. by filling up the gap when it forms.

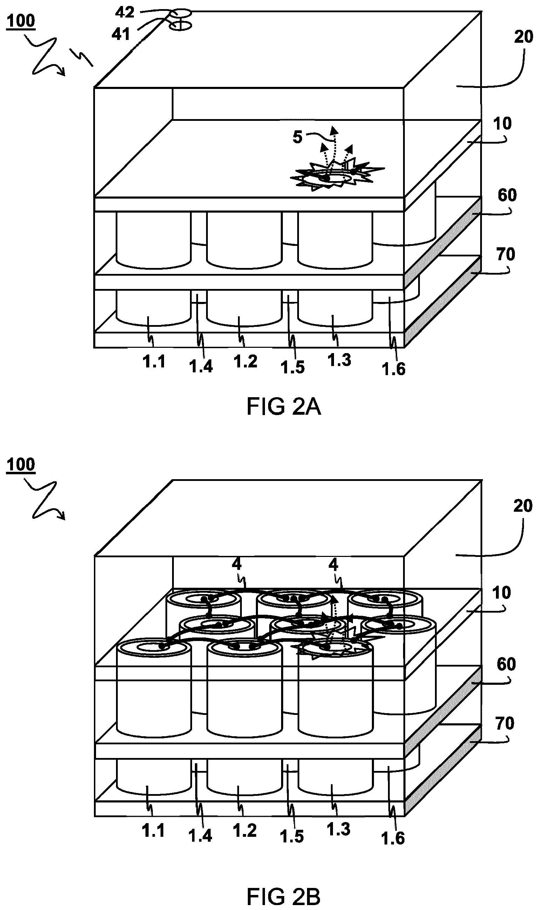

Figures 2A and 2B show a schematic perspective view of a battery system 100, similar to as shown in figures 1A and 1B. Compared to figure 2A, the cover layer 10 shown in figure 2B is made transparent.

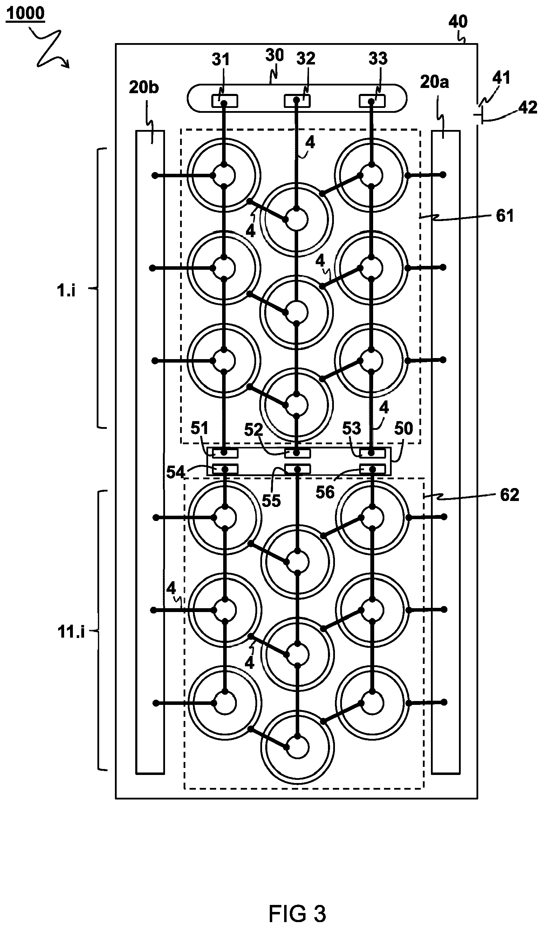

Figure 3 shows an example of battery module 1000. The battery module 1000 comprises a first array of battery cells 1.i, and a second array of battery cells 11.i, each respectively held by a first array holder 61 and a second array holder 62. The module 1000 also comprises a housing 40. The housing 40 has an opening 41 for allowing effluents 5 to be evacuated from the venting chamber 20. One or more battery modules 1000 may be connected together to form a battery pack. Battery cells 1.i, 11.i at an edge of the array are connected to a busbar 20a, 20b. Here two busbars 20a, 20b are provided, to which both arrays are connectable.

The first battery cell array 1.i and the battery cell array 11.i are connected to each other via the array interconnector board 50. The array interconnector board 50 here includes contact zones 51-56, for attaching a connector arm 4 thereto. The interconnector board 50 may optionally be connected to any of the busbars 20a, 20b, e.g. via a connector arm 4. Battery cells 1.i, 11.i at another edge section of the arrays may be connected to the interconnector board 40 by a connector arm 4. Here, battery cells of only one of the arrays 1.i, are connected to a controller interface board 30 for interfacing with a controller.

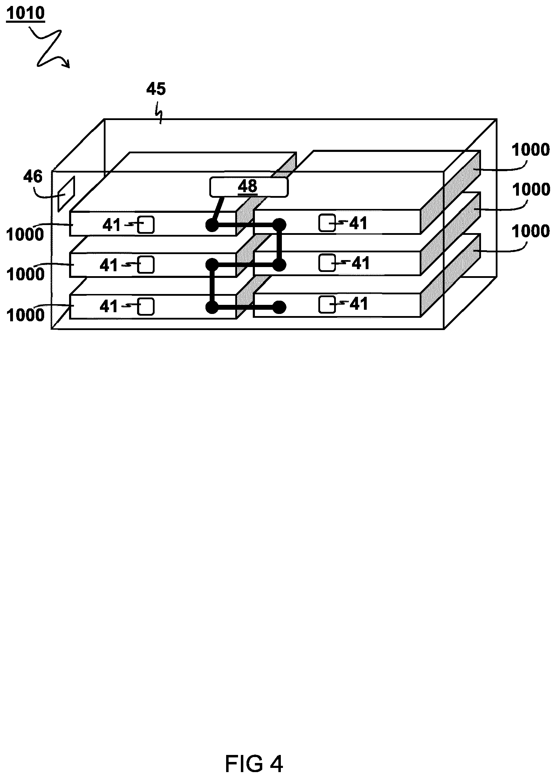

Figure 4 shows a schematic example of a battery pack 1010, including multiple connected battery modules 1000 such as shown in figure 3. The battery pack includes, here a pack housing 45, housing the interconnected battery modules 1000. The pack housing 45 includes an opening 46 for allowing effluents 5, vented from a failed battery cell, and evacuated from a battery module 1000, to also be evacuated from the battery pack 1010. The opening 46 in the pack housing 45 may be provided with a valve, e.g. a pressure relief valve, to prevent contaminants from entering the pack housing 45. A pack terminal 48 is provided for electrically connecting the battery pack 1010 to a load, or charger.

Herein, the invention is described with reference to specific examples of embodiments of the invention. It will, however, be evident that various modifications and changes may be made therein, without departing from the essence of the invention. For the purpose of clarity and a concise description features are described herein as part of the same or separate embodiments, however, alternative embodiments having combinations of all or some of the features described in these separate embodiments are also envisaged.

However, other modifications, variations, and alternatives are also possible. The specifications, drawings and examples are, accordingly, to be regarded in an illustrative sense rather than in a restrictive sense.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean `at least one', and do not exclude a plurality. The mere fact that certain measures are recited in mutually different claims does not indicate that a combination of these measures cannot be used to an advantage.

## Claims

1. Battery system comprising battery cells, a venting chamber, and a cover layer arranged between the battery cells and the venting chamber covering the battery cells,
wherein the cover layer is arranged to locally burst at a location of a failed battery cell under influence of effluents being released from the failed battery cell so as to enable the effluents to escape through the locally burst cover layer into the venting chamber.

2. System of claim 1, wherein the cover layer is configured for shielding the battery cells from effluents escaped into the venting chamber.

3. System of claim 1 or 2, wherein the cover layer comprises weakened zones arranged to burst under influence of the effluents being released from the failed battery cell.

4. System of claim 3, wherein each battery cell of the battery cells is associated with a respective one of the weakened zones of the cover layer.

5. System of any preceding claim, wherein the cover layer includes a flame-retardant material.

6. System of any preceding claim, wherein the cover layer has thickness of between 0.1 and 15 mm, particularly between 0.2 and 10 mm, more particular between 0.5 and 6 mm.

7. System of any preceding claim, wherein the venting chamber includes venting channels configured for directing the effluents through the venting chamber towards an outlet of the venting chamber.

8. System of any preceding claim, wherein the battery cells each include a cylindrically shaped body which extends along a longitudinal axis between two end faces, wherein the battery cells are arranged with their longitudinal axes in parallel, and wherein the cover layer covers an end face of the battery cell bodies.

9. System of any preceding claim, wherein the battery cells each includes a positive pole terminal and a negative pole terminal being at the same end face of the battery cell.

10. System of claim 9, wherein the battery cells are so arranged that their positive and negative pole terminals are at the same side.

11. System of claim 10, wherein the cover layer covers the end face of the battery cells at which the positive and negative pole terminals are provided.

12. System of claim 10 or 11, comprising a cooling body in thermal contact with the battery cells, wherein the cooling body is arranged at a side opposite the side at which the positive and negative pole terminals of the battery cells are provided.

13. System of any preceding claim, wherein the battery cells are electrically connected to one another by a plurality of connector arms which extend between pole terminals of respective battery cells, and wherein each of the connector arms includes a fuse section configured to break, thereby forming a gap, in case an overload current flows through the connector arm, wherein the fuse section is encapsulated by the cover layer.

14. System of claim 13, wherein the cover layer is configured to quench an arc formed in the gap.

15. System of claim 13 or 14, wherein each connector arm of the plurality of connector arms is formed by a single bonding wire.

16. System of claim 15, wherein the bonding wires are noncrossing.

17. System of any preceding claim, wherein the venting chamber is substantially sealed from an exterior of the battery module.

18. System of claim 17, comprising a pressure relief valve arranged between the venting chamber and an exterior of the battery module.

19. System of any preceding claim, comprising a housing holding the battery cells, wherein the venting chamber is formed between the cover layer and the housing.

20. System of claim 19, wherein the housing is spaced from the cover layer to define the venting chamber by a spacing of at least 1 mm, preferably at least 2 mm, such as between 2 and 20 mm, more particular between 2 and 10 mm.

21. System of any preceding claim, wherein the battery cells define a spacing between one another, said spacing being filled with a gas, such as air.

22. System of any preceding claim, wherein the battery cells are arranged in an array.

23. Battery module comprising a system of any preceding claim.

24. Modular battery pack, comprising a plurality of interconnected battery modules of claim 23.

25. Vehicle, comprising a battery system of any of claims 1-22, a battery module of claim 23 and/or a modular battery pack of claim 24.
